(19) Europäisches Patentamt
European Patent Office
Office européen des brevets

(11) EP 4 663 683 A1

# (12) EUROPEAN PATENT APPLICATION

published in accordance with Art. 153(4) EPC

(43) Date of publication:
**17.12.2025 Bulletin 2025/51**

(21) Application number: **24752691.6**

(22) Date of filing: **23.01.2024**

(51) International Patent Classification (IPC):
***C08G 63/672*** (2006.01) ***C08G 18/66*** (2006.01)
***C08G 18/42*** (2006.01) ***C08G 18/32*** (2006.01)
***D04H 1/4358*** (2012.01) ***C08J 5/18*** (2006.01)

(52) Cooperative Patent Classification (CPC):
**C08G 18/10; C08G 18/32; C08G 18/42; C08G 18/48; C08G 18/66; C08G 63/672; C08G 65/332; C08J 5/18; D01F 6/94; D04H 1/4358**

(86) International application number:
**PCT/CN2024/073586**

(87) International publication number:
**WO 2024/164834 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.02.2023 CN 202310092803**

(71) Applicant: **Zhengzhou Zhongyuan Spandex Engineering Technology Co., Ltd**
**Zhengzhou, Henan 450001 (CN)**

(72) Inventors:
- **QIAO, Jianqiang**
  **Zhengzhou, Henan 450001 (CN)**
- **TIAN, Song**
  **Zhengzhou, Henan 450001 (CN)**
- **LI, Rui**
  **Zhengzhou, Henan 450001 (CN)**
- **REN, Zhiyong**
  **Zhengzhou, Henan 450001 (CN)**
- **YE, Zhengrong**
  **Zhengzhou, Henan 450001 (CN)**
- **CUI, Yuewei**
  **Zhengzhou, Henan 450001 (CN)**

(74) Representative: **Keltie LLP**
**No. 1 London Bridge**
**London SE1 9BA (GB)**

## (54) POLYETHER ESTER POLYOL, PREPARATION METHOD THEREFOR, AND METHOD FOR PREPARING POLYURETHANE ELASTOMER BY USING POLYETHER ESTER POLYOL>

(57) The present application relates to a polyether ester polyol, comprising a repeating structure of formula (1) and an end-capped alcohol hydroxyl group: formula (1), wherein $R_1$ is at least one selected from aromatic rings or heteroaromatic rings, and $R_1$ accounts for 4.5%-44% by mass in the repeating structure of formula (1); $R_2$ is at least one selected from saturated alkyl groups having 2-3 carbon atoms; x is 2-20; the mass percentage of the repeating structure of formula (1) in the polyether ester polyol is greater than 75%; the average functionality of the end-capped alcohol hydroxyl group is 1.95-2.00; the number-average molecular weight of the polyether ester polyol is 800-5000. The present application also relates to a preparation method for the polyether ester polyol, and a method for using the polyether ester polyol to prepare polyurethane elastic fibers, non-woven fabrics, films, or elastomers, which enables the production of polyurethane products with lower-cost raw materials while still yielding similar mechanical properties, meeting downstream usage requirements.

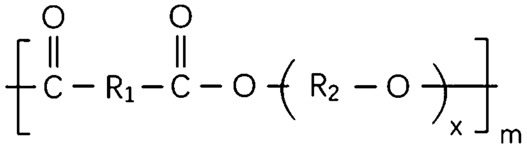

(1)

EP 4 663 683 A1

## Description

### Technical Field

The present invention relates to the field of polyurethane elastic fibers, and in particular, to a polyether ester polyol, a preparation method thereof, and method for using same to prepare polyurethane elastic fibers, non-woven fabrics, films, or elastomers.

### Background technique

Polyurethane is a block copolymer composed of soft segments and hard segments. The soft segments are generally composed of flexible chain segments, which are usually formed by the reaction of polyols such as polyethers, polyesters, end-hydroxyl-capped polybutadienes, etc., and polyisocyanates used for linking the polyols; the hard segments are composed of chain segments with excellent crystallinity, which are usually formed by the reaction of polyisocyanates with small-molecule polyols and small-molecule amine based chain extenders. Both the soft segment structure and the hard segment structure affect the properties of polyurethane. In general, during the deformation of polyurethane, the soft segments are forced to undergo internal orientation along the deformation direction; the flexibility of the soft segments enables the soft segment phase to have high entropic elasticity during use, with an inherent driving force to spontaneously return to the initial most disordered state, thus endowing polyurethane with resilience.

In current industrial manufacturing of Spandex (i.e. polyurethane elastic fiber), polytetrahydrofuran (PTMEG) is generally used as the soft segment raw material for spandex; however, the price of polytetrahydrofuran is relatively high, and it is used in large quantities in spandex production, which directly increases spandex production costs. Certain polyester based diols, such as oxalic acid-based polyester diols have cost advantages when used as the raw material, but the products exhibit poor resistance to alkalis and hydrolysis and are prone to mildew; polyether diols such as polyethylene glycol (PEG) and polypropylene glycol (PPG) have lower raw material costs, but spandex synthesized from polyethylene glycol has the disadvantages of high permanent deformation rate and low recovery modulus, and spandex synthesized from polypropylene glycol has the disadvantage of low modulus; additionally, polyurethanes synthesized from polyethylene glycol and polypropylene glycol have a low breaking strength, which means these are incapable of satisfying downstream spandex application requirements

In industrial production, not only is it necessary for spandex to perform reasonably well, it is also necessary to reduce the spandex production costs as far as possible. Therefore, the present invention focuses on the raw materials for preparing polyurethane fibers, attempting to provide a polyether ester polyol which is lower in cost compared with polytetrahydrofuran; when used in preparing polyurethane elastic fibers, it was unexpectedly found that the polyurethane elastic fibers prepared achieved similar mechanical properties compared to conventional polyurethane fibers prepared with polytetrahydrofuran as the raw material, thus satisfying the spandex application requirements.

### Contents of the Invention

The embodiments of the present application provide a polyether ester polyol, a preparation method thereof, and method for using same to prepare polyurethane elastomer, and the resulting polyurethane elastic fiber, non-woven fabric, films, or elastomers.

The polyether ester polyol of the present application comprises a repeating structure of formula (1) and an end-capped alcohol hydroxyl group:

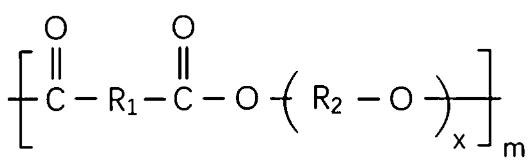

Formula (1) ,

Wherein $R_1$ is at least one aromatic ring or heteroaromatic ring, and the mass content of $R_1$ in formula (1) is 4.5%-44%; $R_2$ is at least one saturated alkyl group having 2-3 carbon atoms; x is 2-20;

The mass percentage of the repeating structure of formula (1) in the polyether ester polyol is greater than 75%.

The average functionality of the end-capped alcohol hydroxyl group is 1.95-2.00.

The number-average molecular weight of the polyether ester polyol is 800-5000.

In one embodiment, the melting point of the polyether ester polyol can be lower than 80°C, and it is preferably in a liquid state at room temperature. In another embodiment, the viscosity of the polyether ester polyol at 90°C and a shear rate

of 1 $s^{-1}$ can be less than 500 poise.

The preparation method of the polyether ester polyol according to the embodiments of the present application may include reacting an aromatic dibasic acid, its esterified product or its anhydride with a polyether diol, where "aromatic" refers to substances with aromatic rings or heteroaromatic rings in their molecular structure. In one embodiment, the aromatic dibasic acid may be selected from one or more of terephthalic acid, isophthalic acid, phthalic acid, biphenyldicarboxylic acid, 1,4-naphthalenedicarboxylic acid, 2,6-naphthalenedicarboxylic acid, 2,3-naphthalenedicarboxylic acid, 2,5-furandicarboxylic acid, terephthalic diacetic acid, isophthalic diacetic acid and phthalic diacetic acid, while, out of cost considerations, the preferred aromatic dibasic acid in the present invention is one or more of terephthalic acid, isophthalic acid, phthalic acid, or 2,5-furandicarboxylic acid. The polyether ester polyol prepared using these substances as the aromatic dibasic acid provides superior cost benefits. Preferably, the aromatic dibasic acid esterified product is obtained by reacting it with a monohydric alcohol having a boiling point lower than 150 °C.

In another embodiment, the number-average molecular weight of the polyether diol may be 100-1000, preferably the degree of polymerization of the polyether diol is 2-20, and more preferably the degree of polymerization of the polyether diol is 3-10.

The present application also provides a method for preparing polyurethane elastic fibers, non-woven fabrics, films or elastomers using the polyether ester polyol of the present invention as a raw material, as well as the polyurethane elastic fibers, non-woven fabrics, films or elastomers thus prepared.

In a specific embodiment, the polyurethane elastic fibers, non-woven fabrics, films or elastomers are prepared by means of solution processing or melt processing.

**Beneficial Effects:**

The raw materials adopted for the polyether ester polyol provided by the present invention are aromatic dibasic acids and polyether diols with monomers composed of 2-3 carbon atoms (such as polyethylene glycol and/or polypropylene glycol). Both of these raw materials are lower in cost, and the resultant polyether ester polyol offers a significant cost advantage over polytetrahydrofuran. Meanwhile polyether segments containing 2-3 carbon atoms per monomer are arranged at intervals with aromatic rings from aromatic dicarboxylic acids via ester bonds, and this can significantly improve the breaking strength and recovery modulus of the polyurethane fibers prepared from polyethylene glycol and polypropylene glycol, while significantly reducing their permanent deformation. Compared with conventional polyurethane fibers prepared from polytetrahydrofuran, they have similar mechanical properties, enabling the polyurethane fibers prepared from low-cost raw materials such as polyethylene glycol and polypropylene glycol to satisfy textiles requirements.

**Detailed Description of Embodiments**

For polyurethane elastic fibers, the most common production method currently in use relies on a polyether diol as the raw material, especially polytetrahydrofuran diol, first, reacting it with diisocyanate to form a prepolymer, and then carrying out chain extension of the prepolymer in the presence of a chain extender and a terminator to obtain the product. However, polytetrahydrofuran is relatively expensive and is used in large quantities in the production of polyurethane elastic fibers, which directly drives up the cost of spandex production. Certain polyester based diols, such as oxalic acid-based polyester diols have cost advantages when used as the raw material, but the products exhibit poor resistance to alkalis and hydrolysis and are prone to mildew. When such relatively low cost polyether diols as polyethylene glycol and polypropylene glycol are used as raw materials for the soft segment of spandex, it exhibits disadvantages in having a low breaking strength and a low modulus. Fabric containing spandex requires the spandex to have a certain recovery modulus, so that the fabric can overcome the resistance between the other fibers of which it is composed and the spandex and return to its original shape after deformation, thus possessing shape retention characteristics. In traditional technology, increasing the recovery modulus will cause an increase in the plastic deformation rate,, however, the inventor unexpectedly discovered a type of polyether ester polyol, which costs less compared to polytetrahydrofuran, and when this is used as a raw material for producing polyurethane fibers, the resulting polyurethane fibers not only have a higher recovery modulus but also a lower plastic deformation rate, not only satisfying the wearability requirements of polyurethane elastic fibers, but also having a higher recovery modulus while maintaining a lower plastic deformation rate.

Unless otherwise specified below, the term "polyether diol" refers to polyether diols composed of monomers with 2-3 carbon atoms.

Specifically, the present invention provides a polyether ester polyol, which contains a repeating structure of formula (1) and an end-capped alcohol hydroxyl group:

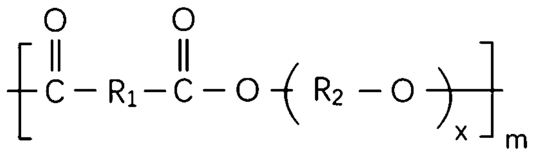

Formula (1)

Wherein $R_1$ can be at least one aromatic ring or heteroaromatic ring, and the mass content of $R_1$ in formula (1) can be 4.5% - 44%; $R_2$ can be at least one saturated alkyl group having 2 - 3 carbon atoms; x can be 2-20; the mass percentage of the repeating structure in formula (1) in the polyether ester polyol can be greater than 75%. When the content of the aromatic group $R_1$ in the repeating unit is too high, it will cause the final polyether ester polyol to have excessive rigidity, which in turn will result in excessively high viscosity, being unfavorable for the progression of the polyurethane fiber production process; if the content of the aromatic group $R_1$ in the polyether ester polyol is too low, it will not have the effect of increasing the recovery modulus of the polyurethane fiber.

The aromatic ring may be at least one out of a benzene ring, a naphthalene ring, an anthracene ring, a phenanthrene ring, etc. The heteroaromatic ring may be at least one out of a pyridine, a furan ring, a thiazole ring, a pyrimidine ring, etc. In an alternative embodiment, apart from an aromatic ring or a heteroaromatic ring, $R_1$ also includes 1-4 methylene groups.

In a preferred embodiment, the polyether ester polyol has an overall linear chain structure where polyether structures and aromatic rings are arranged at intervals; during the research and development process, the inventor found that polyether structures in which monomers with 2-3 carbon atoms are arranged at intervals with rigid aromatic rings effectively improve the mechanical properties of the resulting spandex. This allows polyethylene glycol and polypropylene glycol to be used in the production of polyurethane fibers and enhances the resistance of polyurethane fibers to plastic deformation. Meanwhile, the introduction of aromatic rings or heteroaromatic rings also endows the polyurethane elastic fibers with a higher modulus. In addition, compared with polyether structures relying on polytetrahydrofuran, the use of polyether structures composed of monomers with 2-3 carbon atoms offers a significant advantage in terms of production cost. In a preferred embodiment, the mass percentage of the repeating unit shown in formula (1) in the polyether ester polyol is greater than 95%. In another preferred embodiment, the polyether ester polyol is composed of repeating units of formula (1) and end-capped alcohol hydroxyl groups.

According to the present invention, the average functionality of the end-capped alcohol hydroxyl group of the polyether ester polyol is 1.95-2.00, and preferably 1.96-2.00, and more preferably 1.98-2.00. This ensures that end capping of the polyether ester polyol with isocyanate can occur effectively, and hence chain extension by small-molecule amines or alcohols. If the average functionality is greater than 2.00, using the polyether ester polyol as a raw material for preparing polyurethane may lead to cross-linked structures in the resulting polyurethane, preventing the formation of chain-like polyurethane. Such polyurethane will generate gels during continuous production, hindering the continuity of the production process. If the average functionality is too low, the number-average molecular weight of the resulting polyurethane will also be relatively low, thereby affecting the performance of the polyurethane elastic fiber. In the actual reaction, dehydration of the terminal hydroxyl groups of the polyether diol can result in double bonds forming during condensation polymerization/ring-opening polymerization, furthermore, due to the limitations of the effectiveness of the actual reaction process, the condensation reaction or transesterification reaction of the polyether diol by which polyether ester polyol is formed cannot be 100% complete, so the average functionality of the final polyether ester polyol typically cannot reach 2.00.

To clarify, "average functionality" refers to the average number of moles of alcohol hydroxyl groups per mole of polyether ester polyol that can participate in a reaction. In the present invention, taking into consideration the formation of double bonds from dehydration of polyether diol terminal hydroxyl groups and the presence of unreacted carboxyl groups, the average functionality of the alcohol hydroxyl groups can be calculated by the following formula:

Functionality = 2 × molar amount of alcohol hydroxyl groups / (molar amount of alcohol hydroxyl groups + molar amount of carboxyl groups + molar amount of double bonds)

The number-average molecular weight of the polyether ester polyol of the present invention can be 800-5000, and preferably 1000-3500, and more preferably 1400-2500, and most preferably 1500-2300. The larger the number-average molecular weight of the polyether ester polyol, the higher its viscosity, making continuous operation on an industrial scale difficult. However, if the number-average molecular weight of the polyether ester polyol is too low, more diisocyanate is required for synthesis during polyurethane polymerization in order to achieve a polyurethane prepolymer of consistent molecular weight, resulting in a higher carbamate group content in the prepolymer, and this strengthens the interaction between the prepolymer molecules and increases viscosity. Moreover, the length of the soft segments in the

resulting polyurethane is shorter, affecting the recovery performance of the final polyurethane fibers.

In a preferred embodiment, the viscosity of the polyether ester polyol of the present invention at 90°C and a shear rate of $1S^{-1}$ can be less than 500 poise, and preferably less than 200 poise.

The melting point of the polyether ester polyol of the present invention can be lower than 80°C, and it is preferably in a liquid state at room temperature, thus avoiding solidification during storage or transportation, allowing continuous industrial operation. Otherwise, heating is required to melt it, increasing energy consumption.

The present invention also provides a preparation method of the above polyether ester polyol, which includes subjecting aromatic dibasic acids, their esters, or their anhydrides to condensation or transesterification reactions with polyether diols composed of monomers with 2-3 carbon atoms.

According to the method of the present invention, the aromatic dibasic acid can be selected from one or more of terephthalic acid, isophthalic acid, phthalic acid, biphenyldicarboxylic acid, 1,4-naphthalenedicarboxylic acid, 2,6-naphthalenedicarboxylic acid, 2,3-naphthalenedicarboxylic acid, 2,5-furandicarboxylic acid, terephthalic diacetic acid, isophthalic diacetic acid, and phthalic diacetic acid. In one embodiment, the aromatic dibasic acid esterified product can be obtained by reacting it with a monohydric alcohol with a boiling point lower than 150°C, such as small-molecule alcohols like methanol, ethanol, n-butanol, and n-hexanol, and these can be easily removed by distillation in subsequent esterification or transesterification reactions; the small-molecule alcohol is preferably methanol or ethanol. Moreover, compared with aromatic dibasic acids, the transesterification reaction between the above-mentioned esterified products and polyether diols can be carried out under milder reaction conditions, which is beneficial in terms of production process design. The aromatic dibasic acids suitable for the present invention can be derived from recycled plastics, thereby not only allowing waste recycling, but also reducing the production cost of the polyurethane elastic fibers, thus meeting the requirements of the current green economy better.

According to the method of the present invention, the degree of polymerization of the polyether diol with a monomer composed of 2-3 carbon atoms is preferably 2-20, and more preferably 3-10. The polyether diol number-average molecular weight adopted can be 100-1000, and preferably 300-1000, and more preferably 600-900. In fact, only when the degree of polymerization and the number-average molecular weight of the polyether diol used in the preparation of polyurethane are within the above ranges, do the polyurethane elastic fibers prepared using the polyether ester polyol with the structure where polyether segments and aromatic rings are arranged at intervals achieve an increase in the elastic modulus of the polyurethane elastic fibers while also enhancing their resistance to plastic deformation. If the number-average molecular weight of the polyether diol is too low, the viscosity of the prepared polyether ester polyol will be too high, which is unfavorable for the continuous progress of the process; if the number-average molecular weight of the polyether diol is too high, it will not have the effect of improving the recovery modulus of the polyurethane fiber. Polyether diols can be synthesized by epoxy monomer ring-opening polymerization or by small-molecule diol polycondensation; they can be homopolymers synthesized from a single monomer, or copolymers synthesized from two or more monomers. For example, the polyether diols suitable for the present invention can be polyethylene glycol and polypropylene glycol. In actual production, polyether diols with monomers composed of 2-3 carbon atoms, such as copolymer diols obtained by the reaction of ethylene oxide or propylene oxide with tetrahydrofuran, can also be used.

Optionally, according to the method of the present invention, small-molecule diols or aliphatic dibasic acids may be added during the reaction of aromatic dibasic acids, their esters, or their anhydrides with polyether diols to reduce costs or to partially modify the polyether ester polyol. The amount of small-molecule diols should be strictly controlled, as excessive introduction of small-molecule diols will result in the final polyether ester polyol having viscosity that is too high, which is not conducive to the subsequent isocyanate end-capping and chain-extension reactions. Preferably, the amount of small-molecule diols should be less than 50% by mass of the polyether polyol, and more preferably less than 20%. The small-molecule diols have a number-average molecular weight of less than 200 and may be one or more of ethylene glycol, propylene glycol, or butanediol.

The polyether ester polyol of the present invention may be prepared by vacuum esterification or transesterification, generally in two stages.

The first-stage aromatic dibasic acid esterification reaction process may be carried out under nitrogen protection at normal pressure and a temperature of 150-230°C. The reaction temperature may be gradually increased, and the heating process may adopt a PID control program (proportional-integral-derivative automatic control program) for heating. When the entire system becomes homogeneous, it indicates the completion of the first-stage reaction, because the aromatic dibasic acid cannot be dissolved in the system at the initial charging and is present in a suspended state. When the water yield of the system exceeds 90%, the system changes to becoming homogeneous, wherein 'water yield' = amount of water produced / (molar amount of dibasic acid x 36).

After the first-stage esterification reaction is completed, the second-stage esterification reaction process begins and catalysts such as tetraisopropyl titanate, tetrabutyl titanate, tin oxide, antimony oxide, etc., can be added to the system; the amount of the catalyst can be 10-500 ppm (based on the amount of the final polyether ester polyol product). These catalysts have a significant catalytic effect on the esterification or transesterification reaction, making it easier to reduce the acid value of the reaction system. The reaction temperature in the second stage may be 225-250°C. During the

reaction, an acid value tester is used uninterruptedly to monitor the extent to which the reaction has progressed. When the acid value is reduced to the required value (the general requirement is 0.5 mgKOH/g), the second-stage reaction ends, heating is stopped, and the material is discharged after the temperature is reduced to an appropriate temperature, which is usually below 90°C.

The dosage ratio of aromatic dibasic acids to polyether diols may be determined according to the number-average molecular weight of the polyether ester polyol and the type of aromatic dibasic acid, also there are excessive polyether diol alcohol hydroxyl groups relative to the reactive groups of the aromatic dibasic acid. For a given polyether diol and aromatic dibasic acid, the more the amount of polyether diol used, the lower the number-average molecular weight of the polyether ester polyol finally prepared.

The present invention also provides a method for preparing polyurethane products such as polyurethane elastic fibers, non-woven fabrics, films or elastomers using the above-mentioned polyether ester polyol or the polyether ester polyol prepared by the above-mentioned method as a raw material. The polyurethane preparation method can adopt a two-step prepolymer synthesis method, or a one-pot method for one-step feeding.

The two-step polyurethane preparation method includes the following steps: (1) reacting the polyether ester polyol with a diisocyanate to form a prepolymer; and (2) polymerizing the prepolymer with a chain extender and a chain terminator. The one-pot method for preparing polyurethane includes the following steps: (1) Charging the polyether ester polyol, diisocyanate and small-molecule polyol chain extender separately, that is, adding each material into the reaction vessel separately; (2) mixing the polyether ester polyol, diisocyanate and small-molecule polyol chain extender in the reaction vessel, and heating the mixture to react it, or heating it during the mixing process to react it. Among them, the diisocyanate can be one or more selected from diphenylmethane diisocyanate, toluene diisocyanate, isophorone diisocyanate, hexamethylene diisocyanate, dicyclohexylmethane diisocyanate, and their isomers. The chain extender can be an amine-based or alcohol-based chain extender. Specifically, the amine-based chain extender can be a diamine with a carbon count of 2-30; for example, being selected from one or more of ethylenediamine, propylenediamine, pentanediamine, methylpentylenediamine, methylpropylenediamine, octanediamine, triethylenediamine, xylylenediamine, phenylenediamine, diaminocyclohexane, hexamethylenediamine, or dopamine. The alcohol-based chain extender can be one or more common chain extender such as ethylene glycol, 1,4-butanediol, diethylene glycol, 1,6-hexanediol, 1,3-propanediol, and 1,4-dimethylolcyclohexane. The chain terminator can be a monoamine with a carbon count of 2-20, which can be selected from one or more of ethylamine, isopropylamine, n-butylamine, tert-butylamine, hexylamine, dimethylamine, diethylamine, dipropylamine, di-n-butylamine, di-tert-butylamine, diisobutylamine, diisopropylamine, cyclohexylamine, or ethanolamine.

Unless otherwise specified in this specification, the corresponding operating conditions of the prior art using polyether diols for preparing polyurethane products, such as polyurethane elastic fibers, non-woven fabrics, films and elastomers, such as solution processing or melt processing methods, can all be applied to the present invention. For example, polyurethane elastic fibers can be spun by dry spinning of a polyurethane solution, such as the method and equipment described in patent document CN1147628C, or by melt spinning of polyurethane chips, such as the melt spinning method described in patent document CN1180137C; non-woven fabrics can be processed by melt-blown methods and solution electrospinning, etc., specifically such as the melt-blown non-woven fabric manufacturing method described in patent document CN101400838A, and the non-woven fabric prepared by the solution electrospinning method described in patent document JP2009108422A; polyurethane films can be processed by solution coating, dip coating, melt extrusion, blow molding, and casting, etc., specifically such as the polyurethane film preparation coating method described in patent document JP2005205787A, the dip coating method described in patent document WO2015064776A1, the extrusion method described in patent document GB1137520A, the blow molding method described in patent document DE2239478A1, and the casting method described in patent document JP2004203933A; elastomers can be processed by extrusion, injection molding, and casting, etc., specifically such as the polyurethane elastomer preparation extrusion method described in patent document JP1996027376A, the injection molding method described in patent document US3917792A, and the casting method described in patent document CA1251294A. The production methods of the polyurethane products described in the above patent documents are all incorporated into the present invention. The preparation methods of the above-mentioned polyurethane elastic fibers, non-woven fabrics, films and elastomers are only given as examples. Apart from in the manners mentioned above, the polyether ester polyol of the present invention can be used as a diol raw material to produce polyurethane products by any existing technology or means.

## Embodiments

The present invention is described in more detail through the following embodiments, the methods for testing the parameters mentioned are as follows:

1. Average functionality:

Functionality = 2 x molar amount of alcohol hydroxyl groups/(molar amount of alcohol hydroxyl groups + molar amount of carboxyl groups + molar amount of double bonds).

Whereby, the acid value was determined by the method described in HG/T 2708-1995; the hydroxyl value was determined by the method described in HG/T 2709-1995; the degree of unsaturation was determined by the method described in GB/T 12008.6-2010. The corresponding acid values, hydroxyl values, and degrees of unsaturation were converted into the molar amounts of the corresponding end groups of the polyether ester diol.

2. 300% tensile stress, tensile strength at break, and elongation at break: all were tested in accordance with "Test method for tensile properties of spandex yarn" in People's Republic of China Textile Industry Standard (FZ/T 50006-2013).

3. Plastic deformation testing:

One end of the prepared sample was clamped into the upper clamp, the other end was pre-tensioned to make the sample straighten axially, it was clamped into the lower clamp, and the instrument started.

The sample was stretched from 0% elongation (L0) to 300% elongation (L1) at a speed of 500 mm/min, then returned to 0% elongation, and the stretching-recovery cycle was performed four times. During the fifth stretching to 300% elongation, the force value F1 when stretched to 200% was recorded, followed by a delay of 30 seconds, then recovery to 0% elongation, and the force value F2 when recovering to 200% was recorded during this process. After a delay of 30 seconds, the sixth stretching was performed and length L2 recorded when the sample was stretched to the pre-tensioned position.

$$\text{Plastic deformation rate calculation formula: } (L2 - L0)/L0 \times 100\%$$

"5LP200%" represents the stress value when stretched to 200% elongation in the 5th cycle (i.e., F1), and "5UP200%" represents the rebound stress value when recovering from 300% elongation to 200% elongation in the 5th cycle (i.e., F2), which can be used to characterize the recovery modulus. "Plastic deformation rate" refers to the spandex yarn length increase ratio compared to the original length after 5 stretching cycles. "5UP200%/5LP200%" represents the ratio of the recovery stress at 200% elongation to the tensile stress at 200% elongation in the 5th stretching cycle during the 5-cycle stretching test.

In addition, the antioxidant mentioned in the following embodiments is Antioxidant 245, the dyeing aid is DH300R or 2462B, and the light stabilizer is Tinuvin 791, all of which are commercially available substances.

Embodiment 1: Preparation of Polyether Ester Diol with a Number-Average Molecular Weight of 2120

17 parts by weight of polypropylene glycol PPG600 (with a number-average molecular weight 600) and 3.2 parts by weight of terephthalic acid were charged into a reaction kettle. Nitrogen was introduced to displace the air inside the reaction kettle. Stirring in the reaction kettle was started at a stirring speed of 150 rpm. A programmed temperature increase was applied to the system, raising the temperature to 150°C, and this maintained for 5 hours; the temperature was then increased further to 230°C and this temperature maintained until the water yield of the system reached more than 90% of the theoretical value, and the solution changed into a homogeneous phase. The catalyst tetraisopropyl titanate was added, and a vacuum gradually introduced to 2000 Pa. Once the acid value was lower than 0.5 mgKOH/g, a polyether ester diol with a number-average molecular weight of 2120 was obtained. It was tested to have an average functionality of 1.98, a viscosity of 18 poise at 90°C at $1S^{-1}$, and was in a liquid state at room temperature.

Embodiment 2: Preparation of Polyurethane Elastic Fiber Using the Polyether Ester Diol of Embodiment 1

100 kg of the polyether ester diol prepared in Embodiment 1 was added to a reaction kettle preheated to a constant temperature of 45°C, stirring was started at a speed of 150 rpm, and 21.3 kg of diphenylmethane diisocyanate was added. After stirring for 5 minutes, the temperature was increased to 90°C; the reaction took place at 90°C for 2 hours, yielding a prepolymer.

The prepolymer was cooled to 50°C, and the prepolymer dissolved using 154.4 kg of dimethylacetamide (DMAc), and then an amine solution with a mass concentration of 3% containing 2.25 kg of ethylenediamine and 0.28 kg of diethylamine was added. The stirring speed was increased to 300 rpm for the chain extension reaction to take place. After

the chain extension reaction was complete, necessary additives such as antioxidants and dyeing aids were added, and the mixture was aged for 30 hours to obtain a spinning dope with a solid content of 35%. The above dope was dry-spun to obtain a polyurethane elastic fiber PUU-1 with a denier of 40D.

Embodiment 3: Preparation of Polyether Ester Diol with a Number-Average Molecular Weight of 1500

17 parts by weight of polypropylene glycol PPG600 (number-average molecular weight 600) and 2.7 parts by weight of terephthalic acid were charged into a reaction kettle. Nitrogen was introduced to displace the air in the reaction kettle, and the stirring of the reaction kettle was started at a stirring speed of 150 rpm. A programmed temperature increase was applied to the system, raising the temperature to 150°C, and this maintained for 5 hours; the temperature was then increased further to 230°C and this temperature maintained until the water yield of the system reached more than 90% of the theoretical value, and the solution changed into a homogeneous phase. The catalyst tetraisopropyl titanate was added, and a vacuum gradually introduced to 2000 Pa. Once the acid value was lower than 0.5 mgKOH/g, a polyether ester diol with a number-average molecular weight of 1500 was obtained. It was tested to have an average functionality of 1.98, a viscosity of 12 poise at 90°C at $1S^{-1}$, and was in a liquid state at room temperature.

Embodiment 4: Preparation of Polyurethane Elastic Fiber Using the Polyether Ester Diol of Embodiment 3

100 kg of the polyether ester diol obtained in Embodiment 3 was added to a reaction kettle preheated to a constant temperature of 45°C, stirring was started at a speed of 150 rpm. 26.5 kg of diphenylmethane diisocyanate was added, and after stirring for 5 minutes, the temperature was increased to 90°C; the reaction took place at 90°C for 2 hours, yielding a prepolymer.

The prepolymer was cooled to 50°C, and the prepolymer dissolved using 161 kg of dimethylacetamide (DMAc), and then an amine solution with a mass concentration of 3.2% containing 2.33 kg of ethylenediamine and 0.28 kg of diethylamine was added. The stirring speed was increased to 300 rpm for the chain extension reaction to take place. After the chain extension reaction was complete, necessary additives such as antioxidants and dyeing aids were added, and the mixture was aged for 30 hours to obtain a spinning dope with a solid content of 35%. The above dope was dry-spun to obtain a polyurethane elastic fiber PUU-2 with a denier of 40D.

Embodiment 5: Preparation of Polyether Ester Diol with a Number-Average Molecular Weight of 4700

17 parts by weight of polypropylene glycol PPG600 (with a number-average molecular weight 600) and 4.1 parts by weight of terephthalic acid were charged into a reaction kettle. Nitrogen was introduced to displace the air in the reaction kettle. The stirring of the reaction kettle was started at a stirring speed of 150 rpm. A programmed temperature increase was applied to the system, raising the temperature to 150°C, and this maintained for 5 hours; the temperature was then increased further to 230°C and this temperature maintained until the water yield of the system reached more than 90% of the theoretical value, and the solution changed into a homogeneous phase. The catalyst tetraisopropyl titanate was added and a vacuum introduced to 2000 Pa, and when the acid value was lower than 0.5 mgKOH/g, the polyether ester diol with a number-average molecular weight of 4700 was obtained. It was tested to have an average functionality of 1.96, a viscosity of 60 poise at 90°C at $1S^{-1}$, and was in a liquid state at room temperature.

Embodiment 6: Preparation of Polyurethane Elastic Fiber Using the Polyether Ester Diol of Embodiment 5

100 kg of the polyether ester diol of Embodiment 5 was added to a reaction kettle preheated to a constant temperature of 45°C. Stirring was started at 150 rpm. 14.3 kg of diphenylmethane diisocyanate was added, and after stirring for 5 minutes, the temperature was increased to 90°C; the reaction took place at 90°C for 2 hours, yielding a prepolymer.

The prepolymer was cooled to 50°C, and the prepolymer dissolved using 145.5 kg of dimethylacetamide (DMAc), and then an amine solution with a mass concentration of 3.2% containing 2.12 kg of ethylenediamine and 0.26 kg of diethylamine was added. The stirring speed was increased to 300 rpm for the chain extension reaction to take place. After the chain extension reaction was complete, necessary additives such as antioxidants and dyeing aids were added, and the mixture was aged for 30 hours to obtain a spinning dope with 35% solid content. The dope was dry-spun to obtain 40D polyurethane elastic fiber PUU-3.

Comparative Embodiment 1: Preparation of Polyurethane Elastic Fiber Using Polytetrahydrofuran (PTMG) Dope with a Number-Average Molecular Weight of 2000

100 kg of polytetrahydrofuran PTMG2000 (number-average molecular weight 2000) was added to a reaction kettle preheated to a constant temperature of 45°C, and stirring was started at 150 rpm. 22.2 kg of diphenylmethane diisocyanate was added, and after stirring for 5 minutes, the temperature was increased to 90°C; the reaction took place at 90°C for 2

hours, yielding a prepolymer.

The prepolymer was cooled to 50°C, dissolved in 155.5 kg of dimethylacetamide (DMAc), and then an amine solution with a concentration of 3.2% containing 2.26 kg of ethylenediamine and 0.28 kg of diethylamine was added. The stirring speed was increased to 300 rpm for the chain extension reaction to take place. After adding necessary additives such as antioxidants and dyeing aids, the mixture was aged for 30 hours to obtain a spinning dope with 35% solid content. The dope was dry-spun to obtain 40D polyurethane elastic fiber PUU-0.

Embodiment 7: Preparation of Polyether Ester Diol with a Number-Average Molecular Weight of 3140

17 parts by weight of polyethylene glycol PEG200 (number-average molecular weight 200) and 3.7 parts by weight of naphthalene dicarboxylic acid were charged into a reaction kettle. Nitrogen was introduced to displace the air in the reaction kettle, and stirring of the reaction kettle was started at a stirring speed of 150 rpm. A programmed temperature increase was applied to the system, raising the temperature to 150°C, and this maintained for 5 hours; the temperature was then increased further to 230°C and this temperature maintained until the water yield of the system reached more than 90% of the theoretical value, and the solution changed into a homogeneous phase. The catalyst tetraisopropyl titanate was added and a vacuum gradually introduced to 2000 Pa. Once the acid value was lower than 0.5 mgKOH/g, a polyether ester diol with a number-average molecular weight of 3140 was obtained. It was tested to have an average functionality of 1.97, a viscosity of 105 poise at 90°C at $1S^{-1}$, and was in a liquid state at room temperature.

Embodiment 8: Preparation of Polyether Ester Diol with a Number-Average Molecular Weight of 3250

17 parts by weight of polypropylene glycol PPG1000 (number-average molecular weight 1000) and 1.9 parts by weight of naphthalene dicarboxylic acid were charged into a reaction kettle. Nitrogen was introduced to displace the air, and stirring was started at 150 rpm. A programmed temperature increase was applied to the system, raising the temperature to 150°C, and this maintained for 5 hours; the temperature was then increased further to 235°C and this temperature maintained until the system became a transparent homogeneous phase. The catalyst tetraisopropyl titanate was added, and a vacuum gradually introduced to 2000 Pa. When the acid value was below 0.5 mgKOH/g, the polyether ester diol with a number-average molecular weight of 3250 was obtained. Testing showed an average functionality of 1.99, viscosity of 32 poise at 90°C at $1S^{-1}$, and a melting point of 32.1°C.

Embodiment 9: Preparation of Polyether Ester Diol with a Number-Average Molecular Weight of 3500

17 parts by weight of polypropylene glycol PPG950 (number-average molecular weight 950) and 2.1 parts by weight of terephthalic acid were charged into a reaction kettle. Nitrogen was introduced to displace the air, and stirring was started at 150 rpm. A programmed temperature increase was applied to the system, raising the temperature to 150°C, and this maintained for 5 hours; the temperature was then increased further to 235°C and this temperature maintained until the system became a transparent homogeneous phase. The catalyst tetraisopropyl titanate was added, and a vacuum gradually introduced to 2000 Pa. When the acid value was below 0.5 mgKOH/g, the polyether ester diol with a number-average molecular weight of 3500 was obtained. This had an average functionality of 1.99, viscosity of 28 poise at 90°C at $1S^{-1}$, and was in a liquid state at room temperature.

Comparative Embodiment 2: Preparation of Polyether Ester Diol with a Number-Average Molecular Weight of 3150

17 parts by weight of diethylene glycol DEG (number-average molecular weight 106) and 23 parts by weight of terephthalic acid were charged into a reaction kettle. Nitrogen was introduced to displace the air, and stirring was started at 150 rpm. A programmed temperature increase was applied to the system, raising the temperature to 150°C, and this maintained for 5 hours; the temperature was then increased further to 225°C and this temperature maintained until the water yield of the system reached more than 90% of the theoretical value, and the solution changed into a homogeneous phase. The catalyst tetraisopropyl titanate was added, and a vacuum gradually introduced to 2000 Pa. When the acid value was below 0.5 mgKOH/g, the polyether ester diol with a number-average molecular weight of 3150 was obtained. This had an average functionality of 1.99, viscosity of 2000 poise at 90°C at $1S^{-1}$, and a melting point of 70°C.

Comparative Embodiment 3: Preparation of Polyurethane Elastic Fiber Using the Polyether Ester Diol of Comparative Embodiment 2

100 kg of the polyether ester diol obtained in Comparative Embodiment 2 was added to a reaction kettle preheated to a constant temperature of 45°C, and stirring was started at 150 rpm. After 49 kg of dimethylacetamide (DMAc) was added and had dissolved and viscosity had been reduced, 17.1 kg of diphenylmethane diisocyanate was added. After stirring for 5 minutes, the temperature was raised to 90°C; the reaction took place at 90°C for 2 hours, yielding a prepolymer.

The prepolymer was cooled to 50°C, dissolved in 100 kg of dimethylacetamide (DMAc), and then a 3.2% concentration amine solution containing 2.17 kg of ethylenediamine and 0.27 kg of diethylamine was added. The stirring

speed was increased to 300 rpm for the chain extension reaction to take place. After adding antioxidants, dyeing aids, etc., the mixture was aged for 30 hours to obtain a 35% solid-content spinning dope, which was dry-spun to yield 40D polyurethane elastic fiber PUU-4.

Comparative Embodiment 4: Preparation of Polyurethane Elastic Fiber Using Polyethylene Glycol Solution with a Number-Average Molecular Weight of 1500

100 kg of polyethylene glycol with a number-average molecular weight of 1500 was added to a reaction kettle preheated to a constant temperature of 45°C. Stirring was started at 150 rpm. 26.5 kg of diphenylmethane diisocyanate was added, and after stirring for 5 minutes, the temperature was increased to 90°C; the reaction took place at 90°C for 2 hours, yielding a prepolymer.

The prepolymer was cooled to 50°C, and the prepolymer dissolved using 161 kg of dimethylacetamide (DMAc), and then an amine solution with a concentration of 3.2% containing 2.32 kg of ethylenediamine and 0.28 kg of diethylamine was added. The stirring speed was increased to 300 rpm for the chain extension reaction to take place. After the chain extension reaction was complete, necessary additives such as antioxidants and dyeing aids were added, and the mixture was aged for 30 hours to obtain a spinning dope with 35% solid content. The dope was dry-spun to obtain 40D polyurethane elastic fiber PUU-5.

Comparative Embodiment 5: Preparation of Polyurethane Elastic Fiber Using Polyethylene Glycol Solution with a Number-Average Molecular Weight of 2000

100 kg of polyethylene glycol with a number-average molecular weight of 2000 was added to a reaction kettle preheated to a constant temperature of 45°C. Stirring was started at 150 rpm. 21.98 kg of diphenylmethane diisocyanate was added, and after stirring for 5 minutes, the temperature was increased to 90°C; the reaction took place at 90°C for 2 hours, yielding a prepolymer.

The prepolymer was cooled to 50°C, and the prepolymer dissolved using 155.24 kg of dimethylacetamide (DMAc), and then an amine solution with a concentration of 3.2% containing 2.24 kg of ethylenediamine and 0.28 kg of diethylamine was added. The stirring speed was increased to 300 rpm for the chain extension reaction to take place. After the chain extension reaction was complete, necessary additives such as antioxidants and dyeing aids were added, and the mixture was aged for 30 hours to obtain a spinning dope with 35% solid content. The dope was dry-spun to obtain 40D polyurethane elastic fiber PUU-6.

The following parameters of the polyurethane elastic fibers (i.e., spandex yarns) obtained in Embodiments 2, 4, 6 and Comparative Embodiments 1, 3, 4, 5 were tested according to the above-mentioned test methods and the test results summarized in the following table.

| Spandex yarns | Stress at 300% elongation, cN | Breaking strength, cN | Elongation at break, % | 5LP200%, cN | 5UP200%, cN | Plastic deformation rate, % | 5UP200%/ 5LP200% |
|---|---|---|---|---|---|---|---|
| PUU-0 | 12.1 | 45.3 | 550 | 1.88 | 1.21 | 31.4 | 64.4% |
| PUU-1 | 15.0 | 35.9 | 542 | 1.95 | 1.56 | 25.2 | 80.0% |
| PUU-2 | 17.9 | 34.8 | 423 | 2.22 | 1.83 | 27.3 | 82.4% |
| PUU-3 | 10.5 | 40.3 | 652 | 1.60 | 1.26 | 23.1 | 78.8% |
| PUU-4 | 25.4 | 34.8 | 381 | 1.49 | 0.60 | 64.4 | 40.3% |
| PUU-5 | 6.2 | 12.1 | 417 | 1.02 | 0.75 | 63.5 | 73.5% |
| PUU-6 | 8.9 | 25.2 | 703 | 0.91 | 0.72 | 30.1 | 79.1% |

As can be seen from the data in the above table, compared to polyurethane elastic fibers prepared from polyethylene glycol and polypropylene glycol as raw materials, the polyurethane elastic fibers prepared using the polyether ester polyol of the present invention have significantly improved tensile stress and breaking strength, these being close to or even exceeding those of conventionally used polyurethane elastic fibers prepared from polytetrahydrofuran ether diol, thus meeting the performance requirements for spandex yarns used in garments. In addition, the plastic deformation rates of the polyurethane elastic fibers prepared with the polyether ester polyol of the present invention have decreased significantly. From the 5UP 200% values, it can be seen that the polyurethane elastic fibers using the polyether ester diol of the present invention have a higher 5UP 200% recovery stress, that is, a higher recovery modulus, which indicates greater resilience and can result in better fabric shape retention. To sum up, the polyether ester polyol provided by the present invention effectively improves the mechanical properties of fibers when polyethers with monomers composed of 2-3 carbon atoms are used as the soft segment of polyurethane fibers. Compared with conventional

polyurethane fibers prepared from polytetrahydrofuran, it has similar mechanical properties, is effective in reducing the cost of producing spandex, and is effective in improving wearability.

The spinning dope in Embodiments 2, 4, 6 and Comparative Embodiments 1, 3, 4, 5 was diluted from having a solid content of 35% to having a solid content of 20%, and then a polyurethane film glove was prepared by an immersion coating method, and sample film strips cut yielding PUU-F1, PUU-F2, PUU-F3, corresponding to the embodiments, and sample film strips cut yielding PUU-F0, PUU-F4, PUU-F5, PUU-F6 corresponding to the comparative embodiments. The specific preparation steps of the sample film strips were as follows: first, the hand mold was slowly immersed in a tank containing the diluted dope, then the hand mold was lifted slowly out of the dope tank, then the hand mold was slowly rotated resulting in the dope having a uniform thickness on the surface of the hand mold, then the hand mold was dried in an oven, and the glove peeled off after drying, yielding a polyurethane film glove with a wall thickness of about 150 microns. In order to test the mechanical properties of the glove film, the film on the palm part of the glove was cut into strips with a width of 6 mm and a length of 10 cm, and the mechanical properties tested.

The mechanical properties were as follows:

| Sample film strips | Stress at 300% elongation, N | Breaking strength, N | Elongation at break, % | 5LP200%, N | 5UP200%, N | Plastic deformation rate, % | 5UP200%/ 5LP200% |
|---|---|---|---|---|---|---|---|
| PUU-F0 | 2.23 | 15.56 | 1151 | 1.13 | 0.73 | 23.75 | 64.6% |
| PUU-F1 | 2.81 | 12.53 | 1103 | 1.44 | 1.15 | 18.92 | 79.9% |
| PUU-F2 | 3.36 | 11.82 | 842 | 1.72 | 1.42 | 20.48 | 82.5% |
| PUU-F3 | 1.83 | 13.54 | 1306 | 0.92 | 0.72 | 17.33 | 78.3% |
| PUU-F4 | 4.42 | 11.71 | 799 | 0.42 | 0.18 | 65.3 | 42.9% |
| PUU-F5 | 1.22 | 5.03 | 861 | 0.30 | 0.22 | 64.2 | 73.3% |
| PUU-F6 | 1.68 | 8.42 | 1379 | 0.41 | 0.32 | 32.5 | 78% |

As can be seen from the data in the above table, for the thin-film product gloves prepared using the polyether ester polyol of the present invention, tests on the film pieces cut from their palms show that compared with the thin-walled product film pieces made from polyethylene glycol and polypropylene glycol as raw materials, both the tensile stress and breaking strength have improved significantly. They come close to or even exceed the mechanical properties of the thin-film product film pieces prepared from polytetrahydrofuran, thus meeting the mechanical property requirements for elastic thin-film gloves, having properties consistent with spandex yarns. Additionally, the polyurethane film gloves prepared from the polyether ester diol of the present invention exhibit low plastic deformation, resulting in the shape of the film glove product being more stable; in terms of 5UP200% values, the polyurethane film sheets prepared from the polyether ester diol of the present invention have a greater 5UP200% recovery force, which ensures the gloves fit better. Additionally, while maintaining the fit, the gloves can be made thinner, thereby reducing the raw material cost of the film gloves. To sum up, the polyether ester polyol provided by the present invention effectively increases the mechanical performance of membrane strips in which polyethers based on monomers composed of 2-3 carbon atoms are used as the soft segment of the polyurethane membrane strips; in the same manner, this yields thin-walled thin-film glove products with a lower deformation rate and higher recovery modulus, which not only results in the shape of the thin-film glove product being maintained, but also improves the fit of the thin-film glove product, while also reducing the raw material manufacturing cost.

Embodiment 10: Melt-Spun Spandex Yarn Prepared from the Polyether Ester Diol of Embodiment 3

The polyether ester diol of Embodiment 3, 1,4-butanediol, and diphenylmethane diisocyanate were metered into a twin-screw extruder at a molar ratio of 1.2:1:2.2, followed by continuous polymerization extrusion at 195°C. After underwater granulation and drying until the moisture content of the polyurethane particles was lower than 100 ppm, necessary additives such as antioxidants and light stabilizers were added and melt spinning carried out to obtain 20D spandex yarn TPU-1.

Comparative Embodiment 6: Melt-Spun Spandex Yarn Prepared from Polytetrahydrofuran with a Number-Average Molecular Weight of 2000

Polytetrahydrofuran PTMG2000 (number-average molecular weight 2000), 1,4-butanediol, and diphenylmethane diisocyanate were metered into a twin-screw extruder at a molar ratio of 1.2:1:2.2, followed by continuous polymerization

extrusion at 190°C. After underwater granulation and drying until the moisture content of the polyurethane particles was lower than 100 ppm, necessary additives such as antioxidants and light stabilizers were added and melt spinning carried out to obtain 20D TPU-0.

Comparative Embodiment 7: Melt-Spun Spandex Yarn Prepared from Polyethylene Glycol with a Number-Average Molecular Weight of 1500

Polyethylene glycol with a number-average molecular weight of 1500, 1,4-butanediol, and diphenylmethane diisocyanate were metered into a twin-screw extruder at a molar ratio of 1.2:1:2.2, followed by continuous polymerization extrusion at 190°C. After underwater granulation and drying until the moisture content of the polyurethane particles was lower than 100 ppm, necessary additives such as antioxidants and light stabilizers were added and melt spinning carried out to obtain 20D TPU-2.

| Spandex yarns | Stress at 300% elongation, cN | Breaking strength, cN | **Elongation** at break, % | 5LP200%, cN | 5UP200%, cN | Plastic deformation rate, % | 5UP200%/ 5LP200% |
|---|---|---|---|---|---|---|---|
| TPU-0 | 12.3 | 45 | 540 | 1.775 | 1.14 | 32.8 | 64.5% |
| TPU-1 | 17.5 | 40 | 485 | 2.21 | 1.77 | 28.2 | 82.4% |
| TPU-2 | 5.5 | 11 | 416 | 0.986 | 0.712 | 38.2 | 72.3% |

A comparison of the mechanical properties between the above comparative embodiments and embodiments shows that the melt-spun spandex yarns processed using polyether ester diol as the raw material have significantly higher tensile stress and recovery modulus than melt-spun spandex yarns processed using polytetrahydrofuran, demonstrating similar mechanical property characteristics and advantages to solvent-form processed dry-spun spandex yarns.

## Claims

1. A polyether ester polyol, comprising a repeating structure of formula (1) and an end-capped alcohol hydroxyl group:

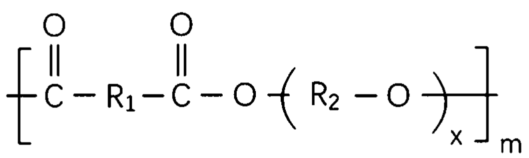

Formula (1),

Wherein $R_1$ is at least one aromatic ring or heteroaromatic ring, and the mass content of $R_1$ in formula (1) is 4.5%-44%; $R_2$ is at least one saturated alkyl group having 2-3 carbon atoms; x is 2-20;

The mass percentage of the repeating structure of formula (1) in the polyether ester polyol is greater than 75%;
The average functionality of the end-capped alcohol hydroxyl group is 1.95-2.00;
The number-average molecular weight of the polyether ester polyol is 800-5000.

2. The polyether ester polyol according to Claim 1, wherein the melting point of the polyether ester polyol is lower than 80°C, and it is preferably in a liquid state at room temperature.

3. The polyether ester polyol according to Claim 1, wherein the viscosity of the polyether ester polyol at 90°C and a shear rate of $1S^{-1}$ is less than 500 poise.

4. A method for preparing a polyether ester polyol, comprising reacting an aromatic dibasic acid, its ester, or its anhydride with a polyether diol to obtain the polyether ester polyol according to Claim 1.

5. The preparation method according to Claim 4 wherein the aromatic dibasic acid may be selected from one or more of terephthalic acid, isophthalic acid, phthalic acid, biphenyldicarboxylic acid, 1,4-naphthalenedicarboxylic acid, 2,6-naphthalenedicarboxylic acid, 2,3-naphthalenedicarboxylic acid, 2,5-furandicarboxylic acid, terephthalic diacetic acid, isophthalic diacetic acid and phthalic diacetic acid, and preferably, the aromatic dibasic acid esterified product is

obtained by reacting it with a monohydric alcohol having a boiling point lower than 150 °C.

6. The preparation method according to Claim 4 wherein the number-average molecular weight of the polyether diol is 100-1000, and preferably the degree of polymerization of the polyether diol is 2-20, and more preferably the degree of polymerization of the polyether diol is 3-10.

7. A method for preparing polyurethane elastic fibers, non-woven fabrics, films, or elastomers using the polyether ester polyol according to any one of claims 1 to 3 or the polyether ester polyol prepared by the method according to any one of claims 4 to 6 as a raw material, wherein the polyurethane elastic fibers, non-woven fabrics, films, or elastomers are prepared by solution processing or melt processing.

8. The method for preparing polyurethane elastic fibers, non-woven fabrics, films, or elastomers according to Claim 7, comprising the following steps:

(1) Reacting the polyether ester polyol with a diisocyanate to form a prepolymer; and
(2) Polymerizing the prepolymer with a chain extender or a mixture of a chain extender and chain terminator.

9. The method for preparing polyurethane elastic fibers, non-woven fabrics, films, or elastomers according to Claim 7, comprising the following steps:

(1) Adding the polyether ester polyol, diisocyanate and chain extender separately to the reaction vessel;
(2) Mixing the materials mentioned in (1) in the reaction vessel, and heating the mixture to react it, or heating it during the mixing process to react it.

10. The method of producing polyurethane elastic fibers, non-woven fabrics, films, or elastomers according to any one of Claims 7 to 9.

**INTERNATIONAL SEARCH REPORT**

International application No.
**PCT/CN2024/073586**

**A. CLASSIFICATION OF SUBJECT MATTER**

C08G63/672(2006.01)i; C08G18/66(2006.01)i; C08G18/42(2006.01)i; C08G18/32(2006.01)i; D04H1/4358(2012.01)i; C08J5/18(2006.01)i

According to International Patent Classification (IPC) or to both national classification and IPC

**B. FIELDS SEARCHED**

Minimum documentation searched (classification system followed by classification symbols)

IPC:C08G D04H C08J

Documentation searched other than minimum documentation to the extent that such documents are included in the fields searched

Electronic data base consulted during the international search (name of data base and, where practicable, search terms used)

CNTXT; ENTXT; DWPI; CNKI; ISI WEB OF SCIENCE: 聚醚酯多元醇, 芳香, 芳族, 芳杂, 苯二, 聚乙二醇, 聚丙二醇, 聚氨酯, 回弹, 回复模量, 塑性变形, polyetherester polyol, aromatic, heteroaromatic, phthalic, polyethylene glycol, polypropylene glycol, polyurethane, rebound, modulus of recovery, plastic deformation

**C. DOCUMENTS CONSIDERED TO BE RELEVANT**

| Category* | Citation of document, with indication, where appropriate, of the relevant passages | Relevant to claim No. |
|---|---|---|
| PX | CN 116693799 A (ZHENGZHOU ZHONGYUAN SPANDEX ENGINEERING TECHNOLOGY CO., LTD.) 05 September 2023 (2023-09-05)<br>claims 1-10 | 1-10 |
| PX | CN 116715827 A (ZHENGZHOU ZHONGYUAN SPANDEX ENGINEERING TECHNOLOGY CO., LTD.) 08 September 2023 (2023-09-08)<br>claims 1-10 | 1-10 |
| PX | CN 116731280 A (ZHENGZHOU ZHONGYUAN SPANDEX ENGINEERING TECHNOLOGY CO., LTD.) 12 September 2023 (2023-09-12)<br>claims 1-8 | 1-10 |
| PX | CN 116836360 A (ZHENGZHOU ZHONGYUAN SPANDEX ENGINEERING TECHNOLOGY CO., LTD.) 03 October 2023 (2023-10-03)<br>claims 1-10 | 1-10 |
| PX | CN 116808947 A (ZHENGZHOU ZHONGYUAN SPANDEX ENGINEERING TECHNOLOGY CO., LTD.) 29 September 2023 (2023-09-29)<br>description, paragraphs 0030-0041 | 1-10 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **28 April 2024** | **30 April 2024** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**

International application No.
**PCT/CN2024/073586**

**C. DOCUMENTS CONSIDERED TO BE RELEVANT**

| Category* | Citation of document, with indication, where appropriate, of the relevant passages | Relevant to claim No. |
|---|---|---|
| X | CN 102504223 A (SHANDONG DONGDA INOV POLYURETHANE CO., LTD.) 20 June 2012 (2012-06-20)<br>description, paragraphs 0003-0011 | 1-10 |
| A | CN 101432326 A (BASF SE) 13 May 2009 (2009-05-13)<br>entire document | 1-10 |
| A | CN 108467480 A (SHANGHAI LEJOIN POLYMER MATERIALS CO., LTD.) 31 August 2018 (2018-08-31)<br>entire document | 1-10 |
| A | CN 110511346 A (JIAXING UNIVERSITY) 29 November 2019 (2019-11-29)<br>entire document | 1-10 |
| A | US 5436313 A (ARCO CHEMICAL TECHNOLOGY, L.P.) 25 July 1995 (1995-07-25)<br>entire document | 1-10 |
| A | US 5436314 A (ARCO CHEMICAL TECHNOLOGY, L.P.) 25 July 1995 (1995-07-25)<br>entire document | 1-10 |
| A | US 5612444 A (ARCO CHEMICAL TECHNOLOGY, L.P.) 18 March 1997 (1997-03-18)<br>entire document | 1-10 |
| A | WO 2022122552 A1 (BASF SE et al.) 16 June 2022 (2022-06-16)<br>entire document | 1-10 |

Form PCT/ISA/210 (second sheet) (July 2022)

**INTERNATIONAL SEARCH REPORT**
**Information on patent family members**

International application No.
**PCT/CN2024/073586**

| Patent document cited in search report | | | Publication date (day/month/year) | Patent family member(s) | | | Publication date (day/month/year) |
|---|---|---|---|---|---|---|---|
| CN | 116693799 | A | 05 September 2023 | None | | | |
| CN | 116715827 | A | 08 September 2023 | None | | | |
| CN | 116731280 | A | 12 September 2023 | None | | | |
| CN | 116836360 | A | 03 October 2023 | None | | | |
| CN | 116808947 | A | 29 September 2023 | None | | | |
| CN | 102504223 | A | 20 June 2012 | BR | 112013026722 | A2 | 09 July 2019 |
| | | | | WO | 2013060089 | A1 | 02 May 2013 |
| | | | | AU | 2012327771 | A1 | 19 September 2013 |
| | | | | AU | 2012327771 | B2 | 20 August 2015 |
| | | | | MY | 165489 | A | 23 March 2018 |
| | | | | VN | 36957 | A | 25 February 2014 |
| | | | | VN | 10030714 | B | 25 January 2022 |
| | | | | IN | 201301739 | P3 | 26 September 2014 |
| | | | | IN | 320825 | B | 20 September 2019 |
| CN | 101432326 | A | 13 May 2009 | WO | 2007122124 | A1 | 01 November 2007 |
| | | | | US | 2009182113 | A1 | 16 July 2009 |
| | | | | TW | 200806699 | A | 01 February 2008 |
| | | | | KR | 20090006855 | A | 15 January 2009 |
| | | | | DE | 112007000865 | A5 | 26 February 2009 |
| CN | 108467480 | A | 31 August 2018 | None | | | |
| CN | 110511346 | A | 29 November 2019 | CN | 110511346 | B | 25 January 2022 |
| US | 5436313 | A | 25 July 1995 | None | | | |
| US | 5436314 | A | 25 July 1995 | US | 5569737 | A | 29 October 1996 |
| | | | | US | 5610205 | A | 11 March 1997 |
| US | 5612444 | A | 18 March 1997 | CA | 2172661 | A1 | 29 September 1996 |
| | | | | JPH | 0920821 | A | 21 January 1997 |
| | | | | EP | 0735072 | A1 | 02 October 1996 |
| | | | | EP | 0735072 | B1 | 15 July 1998 |
| | | | | ES | 2118661 | T3 | 16 September 1998 |
| | | | | DE | 69600421 | D1 | 20 August 1998 |
| | | | | DE | 69600421 | T2 | 26 November 1998 |
| | | | | ATE | 168390 | T1 | 15 August 1998 |
| | | | | NO | 961211 | D0 | 26 March 1996 |
| | | | | NO | 961211 | L | 30 September 1996 |
| WO | 2022122552 | A1 | 16 June 2022 | US | 2024026061 | A1 | 25 January 2024 |
| | | | | EP | 4259681 | A1 | 18 October 2023 |
| | | | | CA | 3201872 | A1 | 16 June 2022 |
| | | | | CN | 116547334 | A | 04 August 2023 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 1147628 C
- CN 1180137 C
- CN 101400838 A
- JP 2009108422 A
- JP 2005205787 A
- WO 2015064776 A1
- GB 1137520 A
- DE 2239478 A1
- JP 2004203933 A
- JP 1996027376 A
- US 3917792 A
- CA 1251294 A
- GB T1200862010 A